# EUROPEAN PATENT APPLICATION

(11) **EP 4 765 267 A1**
(43) Date of publication of application: **24.06.2026**
(21) Application number: 25220147.0
(22) Date of filing: 02.12.2025
(51) Int. Cl.: H01M 10/04, B65H 19/10, B65H 19/12

(54) **APPARATUS AND METHOD FOR CHANGING REELS IN ELECTROCHEMICAL CELL PRODUCTION**

(30) Priority: 18.12.2024 IT 202400028827
(71) Applicant: G.D S.p.A., 40133 Bologna (BO) (IT)
(72) Inventor: FORTINI, Massimo, 40133 Bologna (BO) (IT); GANDOLFI, Luca, 40133 Bologna (BO) (IT)
(74) Representative: Porta & Consulenti Associati S.p.A.

(57) **Abstract**

An apparatus for changing reels in electrochemical cell production, comprising: a frame (11); at least one mandrel (12) supported by the frame (11) and rotatable about an axis of rotation, the at least one mandrel (12) comprising a shaft (16) configured to accommodate a hollow core (105) of a reel, the shaft (16) comprising a loading end (17) configured to thread the hollow core (105) of the reel; an extraction system (21) configured to translate at least the shaft (16) in a longitudinal direction with respect to the axis of rotation, the shaft (16) being movable between a working position and a loading/unloading position, the loading end (17) being at a greater distance from the frame (11) in the loading/unloading position than in the working position.

A method for changing reels in electrochemical cell production.

## Description

The present invention relates to an apparatus for changing reels in electrochemical cell production.

Furthermore, the present invention relates to a method for changing reels in electrochemical cell production.

The present invention finds a preferred, although not exclusive, application in the sector of the production of electric accumulators, for the realization of which a semi-finished product with a structure of overlapping layers, wound together in certain instances, is used.

In the industrial sector of the production of electric accumulators, electrochemical cells are produced made from positive and negative electrode precursors, arranged alternately one above the other, with an interposed separation layer of dielectric material, generally indicated in the technical jargon of the sector with the term "separator".

The electrode precursors are substantially made by depositing a layer of electrode active material on one surface or both surfaces of an electrode web consisting of a current collector metal sheet. By choosing an appropriate combination of electrode active material and electrode web material, electrode precursors intended to make positive electrodes and electrode precursors intended to make negative electrodes can be obtained.

In the Applicant's experience, in electrochemical cell production, each electrode web (anode and/or cathode) is continuously fed to a forming station for the assembly of the semi-finished product with an overlapping layer structure. For the continuous feed of the electrode web for the anode and for the cathode, use is made of a respective reel having a hollow core on which a respective electrode web is wound.

Similarly, in electrochemical cell production, a separator web wound on a hollow core of a respective reel is fed continuously to the forming station, for the assembly of the semi-finished product with an anode and cathode overlapping layer structure.

In the Applicant's experience, each reel is mounted on a respective mandrel of a machine, and the web is gradually unwound from the reel according to the production needs.

In the Applicant's experience, when an electrode web or separator web in a reel is about to run out or has already run out, it is necessary to provide for a reel change. In a reel change, a reel that has substantially remained without web is removed from the mandrel, and replaced with a new reel, loaded with the electrode or separator web necessary to continue with the process of producing electrochemical cells.

In the Applicant's experience, the reel change operation must be able to be performed in the shortest possible time, to avoid machine downtime that may slow down production.

In the Applicant's experience, a new reel provided with web, especially in the case of metal electrode web, may have a high weight and be difficult to move and thread onto the mandrel.

In the Applicant's experience, the web wound in the reel is a thin material, which can be damaged in the event of impacts or falls, becoming ruined and unusable for the subsequent production process.

The Applicant has perceived that the moment when a reel is threaded on the mandrel or unthreaded out of the mandrel is a particularly complex and delicate moment of the reel change operations, because there is a risk of misalignments between the elements and the forces that come into play, which may lead to damages and/or a fall of the reel.

The Applicant has found that an active movement of the mandrel housing the reel can facilitate the operation wherein the hollow core of the reel is threaded onto a respective shaft of the mandrel, or is unthreaded out of the respective shaft of the mandrel.

The Applicant has also found that the active movement of the mandrel provides for a working position, in which the reel is retained on the shaft of the mandrel, and for a loading/unloading position in which the hollow core of the reel and any web present thereon is threaded or unthreaded out of the respective shaft of the mandrel.

The present invention therefore relates, in a first aspect, to an apparatus for changing reels in electrochemical cell production.

Preferably, the apparatus comprises a frame.

Preferably, the apparatus comprises at least one mandrel supported by the frame and rotatable about an axis of rotation.

Preferably, the at least one mandrel comprises a shaft configured to accommodate a hollow core of a reel.

Preferably, the shaft comprises a loading end configured to thread the hollow core of said reel.

Preferably, the apparatus comprises an extraction system configured to translate at least the shaft in a longitudinal direction with respect to the axis of rotation. Preferably, the shaft is movable between a working position and a loading/unloading position.

Preferably, the loading end is at a greater distance from the frame in the loading/unloading position than in the working position.

The present invention relates, in a second aspect, to a method for changing reels in electrochemical cell production.

Preferably, the method for changing reels comprises providing a first hollow core of a first reel on a shaft of a mandrel, the mandrel being rotatable and supported by a frame, the shaft being in a working position.

Preferably, the method for changing reels comprises translating the shaft to a loading/unloading position by means of an extraction system, moving a loading end of the shaft away from the frame.

Preferably, the method for changing reels comprises unthreading the first hollow core off the shaft, through the loading end.

Preferably, the method for changing reels comprises threading a second hollow core of a second reel onto the shaft, through the loading end.

Preferably, the method for changing reels comprises translating the shaft to the working position by means of the extraction system, bringing the loading end of the shaft closer to the frame.

The Applicant believes that the longitudinal translation movement of the shaft accommodating the hollow core of the reel between the working position and the loading/unloading position allows better access to the loading end, when a hollow core of the reel, for example a depleted reel, must be unthreaded out of the shaft or when a hollow core of the reel, for example a new reel complete with web, must be threaded onto the shaft.

The Applicant therefore believes that the better access to the loading end of the shaft, movable in the loading/unloading position, reduces the risk of misalignments and/or damages and/or falls during reel change operations.

The expression "electrochemical cell" means a device capable of converting chemical energy into electrical energy (and/or vice versa), such as galvanic cells, both primary and secondary, fuel cells or electrolytic cells. The electrochemical cells are generally composed of an anode and a cathode separated from each other by a separating material that is electrically insulating but suitably permeable.

The expression "web" typically means a thin laminar body having a length measured along a longitudinal direction, a width measured along a transverse direction orthogonal to the longitudinal direction, and a thickness measured along a direction orthogonal to both the longitudinal direction and the transverse direction, wherein the thickness is at least two orders of magnitude less than the length and at least one order of magnitude less than the width. In a non-limiting manner, the total length of the web wound on a new reel for electrodes or separators in electrochemical cells may be 4-8 orders of magnitude greater than its thickness and 2-4 orders of magnitude greater than its width. Still by way of example, thicknesses of the electrode webs for the production of anode and/or cathode for electrochemical cells can be comprised from 40 to 220 µm. Still by way of example, thicknesses of the electrode webs for the production of anode and/or cathode for electrochemical cells can be comprised from 16 to 40 µm.

The expression "hollow core" means a substantially cylindrical body and having a cylindrical coaxial cavity passing through the body; the substantially cylindrical body has an extension substantially greater than or equal to the width of a web that can be wound on the substantially cylindrical body. The hollow core can be threaded onto a support that passes into the cylindrical coaxial cavity.

The expression "reel" means a combination of a hollow core with a web or portion of web wound on the hollow core itself.

The expression "frame" means an assembly of one or more elements of a machine connected to each other, configured to provide structural support to further elements applied to the frame itself.

The expression "mandrel" means a mechanical device that allows a further element to be accommodated and rotated; a mandrel comprises several elements, for example a shaft, an electric motor that rotates the shaft, and further accessory elements.

The present invention may have at least one of the preferred features described below. Such features may be present individually or in combination with each other, unless expressly stated otherwise, in the apparatus and in the method according to the present invention.

Preferably, the first reel is an at least partially depleted reel, and the second reel is a reel loaded with an electrode or separator web.

Preferably, the hollow core of the at least partially depleted reel is unthreaded through the loading end, and a further hollow core of the loaded reel is threaded through the loading end, to perform the reel change.

Preferably, the at least one mandrel is mounted cantilevered with respect to the frame.

Preferably, the at least one mandrel comprises at least one electric motor, configured to rotate the shaft.

Preferably, the at least one electric motor of the mandrel is arranged transversely to the axis of rotation of the mandrel.

Preferably, the at least one electric motor of the mandrel comprises a transmission device.

Preferably, the axis of rotation of the at least one mandrel and the axis of the shaft are coaxial with each other.

Preferably, the at least one mandrel and the shaft are aligned with each other along the axis of rotation of the at least one mandrel.

Preferably, the shaft is connected to the electric motor of the at least one mandrel at an end of the shaft that is opposite the loading end.

Preferably, the shaft protrudes further from the frame in the loading/unloading position than in the working position.

Preferably, the loading end is further away from the frame in the loading/unloading position than in the working position.

Preferably, the shaft is approached, passing from the working position to the loading/unloading position, to an operating area in which a reel loading system and/or operators are present.

Preferably, the shaft comprises an abutment end element, configured to limit the sliding of a hollow core of the reel accommodated on the shaft.

Preferably, the abutment end element is positioned on the shaft distally from the loading end.

Preferably, the loading end comprises a substantially smooth cylindrical body.

Preferably, the loading end comprises a tapered cylindrical body.

Preferably, the shaft is mounted cantilevered on the at least one mandrel.

Preferably, the loading end comprises a recess.

Preferably, the recess comprises a concavity that develops along the longitudinal direction.

Preferably, the recess comprises a concavity that develops along the direction longitudinal to an axis of the shaft.

Preferably, the recess is configured to couple with a support of a loading system.

The Applicant considers that the recess facilitates the coupling operation with further elements of the apparatus, for example a loading system, by means of which the hollow core of the reel is threaded onto the loading end.

Preferably, the extraction system is further configured to translate the at least one mandrel integrally with the shaft.

Preferably, the at least one mandrel and the shaft translate together along the longitudinal direction.

Preferably, the at least one mandrel and the shaft translate by the same amounts along the longitudinal direction, during the movement between the working position and the loading/unloading position.

Preferably, the at least one mandrel and the shaft translate by the same amounts along the longitudinal direction, during the movement between the loading/unloading position and the working position.

The Applicant considers that the joint translation of mandrel and shaft allows to provide an apparatus that is more resistant to mechanical stresses and less subject to wear of moving parts.

Preferably, the extraction system comprises at least one linear extraction guide.

Preferably, the at least one linear extraction guide supports the at least one mandrel.

Preferably, the at least one linear extraction guide comprises a pair of rails and a plurality of respective runners that slidably support the at least one mandrel.

Preferably, the pair of rails is parallel to the longitudinal direction with respect to the axis of rotation.

Preferably, the extraction system comprises at least one extraction actuator.

Preferably, the at least one extraction actuator is configured to translate the at least one mandrel on the linear extraction guide between the working position and the loading/unloading position.

Preferably, the at least one extraction actuator comprises a worm screw.

Preferably, the at least one extraction actuator comprises an electric motor configured to drive the worm screw.

Preferably, the apparatus further comprises a pusher system configured to slide the hollow core of the reel on the shaft.

Preferably, the pusher system is movable along a direction parallel to the longitudinal direction with respect to the axis of rotation.

Preferably, the pusher system is movable between a retracted position, wherein said pusher system is distal from the loading end, and an extended position, wherein the pusher system goes beyond the loading end to unthread the hollow core of the reel off the shaft.

Preferably, the pusher system pushes on the first hollow core to cause it to go beyond the loading end, unthreading it out of the shaft.

Preferably, the pusher system comprises a plate element configured to abut with at least the hollow core of the reel.

Preferably, the plate element is configured to abut with the hollow core of the reel and a reel web wound on the hollow core.

Preferably, the plate element is configured to go beyond the abutment end element of the shaft.

Preferably, the plate element comprises a substantially flat abutment surface and configured to interact at least with the hollow core of the reel.

Preferably, the substantially flat abutment surface is further configured to interact with a reel web wound on the hollow core.

The Applicant believes that the pusher system facilitates the unloading operation of a reel, for example an empty reel, in which a hollow core is unthreaded out of the loading end.

Preferably, the pusher system is further configured to translate integrally with the at least one mandrel.

Preferably, the at least one mandrel and the pusher system translate together along the longitudinal direction.

Preferably, the at least one mandrel and the pusher system translate by the same amounts along the longitudinal direction, during the movement between the working position and the loading/unloading position.

Preferably, the at least one mandrel and the pusher system translate by the same amounts along the longitudinal direction, during the movement between the loading/unloading position and the working position.

Preferably, the pusher system translates further with respect to the at least one mandrel, passing from the retracted position to the extended position.

Preferably, the pusher system translates separately from the at least one mandrel, passing from the retracted position to the extended position.

The Applicant considers that the partially joint translation of the mandrel and pusher system allows to provide an apparatus that is more resistant to mechanical stresses and less subject to wear of moving parts.

Preferably, the pusher system comprises at least one linear thrust guide.

Preferably, the at least one linear thrust guide is configured to support the plate element.

Preferably, the at least one linear thrust guide is configured to allow translation of the plate element in a direction parallel to the axis of rotation.

Preferably, the at least one linear thrust guide is parallel to the longitudinal direction with respect to the rotation axis.

Preferably, the at least one linear thrust guide comprises at least one sleeve that can be unthreaded out of the frame.

Preferably, the pusher system comprises at least one thrust actuator configured to move the plate element on the at least one linear guide.

Preferably, the at least one thrust actuator comprises a worm screw.

Preferably, the at least one thrust actuator comprises an electric motor configured to drive the worm screw.

Preferably, the at least one thrust actuator is associated with a thrust sleeve that can be unthreaded out of the frame.

Preferably, the thrust sleeve is parallel to the at least one sleeve of the linear thrust guide.

Preferably, the pusher system comprises a pair of sleeves that can be unthreaded out of the frame, parallel to each other.

Preferably, the thrust sleeve is positioned between and parallel to the pair of sleeves.

Preferably, the shaft comprises a retaining system for at least one hollow core of the reel.

Preferably, the retaining system is configured to retain the hollow core on the shaft during a rotation of the mandrel.

Preferably, the retaining system is internal to the shaft.

Preferably, the retaining system is expandable between a thread/unthread position wherein the shaft has a first diameter smaller than a diameter of the hollow core of the reel, and a retaining position wherein the shaft has a second diameter greater than or equal to the diameter of the hollow core of the reel.

Preferably, the retaining system is reversibly expandable between the thread/unthread position and the retaining position, and between the retaining position and the thread/unthread position.

Preferably, before unthreading the first hollow core off the shaft, it is provided for contracting the shaft to a first diameter less than a diameter of the hollow core of the first reel.

Preferably, after threading the second hollow core onto the shaft, it is provided for expanding the shaft to a second diameter greater than or equal to a diameter of the second hollow core.

Preferably, it is provided for retaining the second hollow core on the shaft during a rotation of the mandrel.

Preferably, the retaining position is adjustable based on a diameter of a hollow core of the reel.

Preferably, the retaining system comprises a plurality of spring-loaded elements.

Preferably, the plurality of spring-loaded elements defines a rest position in the thread/unthread position.

Preferably, the plurality of spring-loaded elements define a stressed position in the retaining position.

Preferably, the retaining system comprises a pneumatic actuation device.

Preferably, the pneumatic actuation device is supplied with compressed air.

Preferably, the pneumatic actuation device acts on the plurality of spring-loaded elements.

Preferably, the pneumatic actuation device acts by compressing springs of the plurality of spring-loaded elements.

Preferably, the pneumatic actuation device acts to cause the plurality of spring-loaded elements to reach the stressed position.

Preferably, the pneumatic actuation device comprises at least one compressed air channel.

Preferably, the at least one compressed air channel is arranged internally to the mandrel.

Preferably, the at least one compressed air channel is arranged coaxial to an axis of rotation of the mandrel.

Preferably, the apparatus comprises at least one additional mandrel, in addition to the at least one mandrel.

Preferably, the apparatus comprises at least two mandrels: a mandrel, and an additional mandrel.

Preferably, the at least one additional mandrel is operable independently of the at least one mandrel.

Preferably, the additional mandrel comprises the features of the at least one mandrel.

Preferably, the additional mandrel is supported by the frame.

Preferably, the additional mandrel is rotatable about an additional axis of rotation.

Preferably, the at least one additional mandrel is parallel to the at least one mandrel.

Preferably, the additional rotation axis of the additional mandrel is parallel to the rotation axis of the at least one mandrel.

Preferably, the additional mandrel comprises an additional shaft configured to accommodate a further hollow core of a further reel.

Preferably, the additional shaft comprises an additional loading end configured to thread the further hollow core of the further reel.

Preferably, the apparatus comprises an additional extraction system configured to translate at least the additional shaft in a longitudinal direction with respect to the additional axis of rotation.

Preferably, the additional shaft is movable between an additional working position and an additional loading/unloading position.

Preferably, the additional loading end of the additional shaft is at a greater distance from the frame in the additional loading/unloading position than in the additional working position.

Preferably, the apparatus comprises a splicing system configured to splice a first web of the reel on the shaft of the at least one mandrel with a second web of the further reel on the additional shaft of the additional mandrel.

The Applicant has verified that the presence of a mandrel and an additional mandrel allows to realize an apparatus in which there is always at least one reel partially loaded on at least one of the mandrels, even when the other mandrel is involved in a reel change operation.

The Applicant considers that this improves the operation and productivity of an electrochemical cell production plant.

Preferably, the apparatus further comprises a loading system.

Preferably, the loading system is movable with respect to the frame.

Preferably, the loading system comprises a self-driving vehicle.

Preferably, the loading system comprises at least one support for a hollow core of the reel.

Preferably, the loading system comprises at least two supports for respective two hollow cores of the reel.

Preferably, the at least one loading system support is configured to interface with the loading end in the loading/unloading position.

Preferably, the at least one support of the loading system is configured to transfer the at least one hollow core of the reel between the at least one support and the shaft and/or vice versa.

Preferably, the second hollow core of the second reel is provided on a first support of the loading system.

Preferably, a second support of the loading system interfaces with the loading end of the shaft, in the loading/unloading position.

Preferably, the second support is coupled head to head with the loading end of the shaft, in the loading/unloading position.

Preferably, the first hollow core of the first reel, unthreaded out of the shaft, is transferred to the second support.

Preferably, the first support of the loading system interfaces with the loading end in the loading/unloading position.

Preferably, the first support is coupled head to head with the loading end of the shaft, in the loading/unloading position.

Preferably, the second hollow core of the reel is transferred by threading it onto the shaft.

The Applicant considers that the loading system increases the flexibility and effectiveness of the reel change.

Preferably, the apparatus comprises at least one sensor configured to detect an amount of web on a hollow core of a reel accommodated on the at least one mandrel.

Preferably, the at least one sensor comprises a non-contact detector. Preferably, the non-contact detector comprises a laser distance gauge.

Preferably, the at least one sensor is arranged to measure a radius of a circumference formed by the web on the hollow core.

Preferably, the apparatus comprises at least one return roller, configured to accommodate an unwound web of a reel.

Preferably, the at least one return roller is arranged parallel to the at least one mandrel.

Preferably, the at least one return roller houses the web unwound on its own cylindrical surface.

The present invention also relates, in a third aspect, to a machine configured for the production of electrochemical cells.

Preferably, the machine comprises a feed station of electrode and separator webs.

Preferably, the machine comprises a forming station configured to package the electrode and separator webs, to form a semi-finished product with an overlapping layer structure;
Preferably, the electrode and separator web feed station comprises at least one apparatus for changing a reel according to the present invention.

The present invention also relates, in a fourth aspect, to a method for the production of electrochemical cells.

Preferably, the production method comprises feeding electrode and separator webs in reels.

Preferably, the production method comprises cutting the electrode and separator webs into pieces of electrode and separator webs.

Preferably, the production method comprises forming a semi-finished product with an overlapping layer structure with the pieces of electrode and separator webs.

Preferably, when a reel of electrode or separator web is running out, it is provided a reel change with the reel change method according to the present invention.

Further features and advantages of the present invention will result from the following detailed description of one or more embodiments thereof, provided by way of non-limiting example.

The detailed description will be made with reference to the attached drawings, in which:
- Figure 1 illustrates an exemplary embodiment of an apparatus for changing reels according to the present invention, with visible reels and relative webs.
- Figure 2 illustrates the embodiment of Figure 1 of the apparatus for changing reels, without the reels and the relative webs.
- Figure 3 illustrates a side view of the apparatus for changing reels of Figure 2.
- Figure 4 illustrates a rear perspective view of the apparatus for changing reels of Figure 2.
- Figure 5 illustrates a sectional view of a mandrel and a shaft of the apparatus for changing reels of Figure 2.
- Figures 6 to 17 schematically exemplify a method for changing reels by means of an apparatus for changing reels of the present invention.

In the different figures, analogous elements will be identified by analogous reference numbers. In some views, where several similar elements are present, only one or some of them will be denoted by a respective reference, meaning that the others are still included in the disclosure.

In the Figures, reference 10 indicates, as a whole, an apparatus, according to the present invention, for changing reels, in particular for changing reels in electrochemical cell production.

The apparatus 10 may be integrated into a machine configured for electrochemical cell production. This machine, not depicted in the drawings, represents a plant or a part of a plant that involves further apparatus including at least one feed station for electrode and separator webs, and at least one forming station configured to package the electrode and separator webs, forming a semi-finished product with an overlapping layer structure.

The apparatus 10 may be inserted into the electrode and/or separator web feed station.

The feed station is configured to cut the electrode and separator webs into pieces of electrode and separator webs, while the forming station is configured to form a semi-finished product with an overlapping layer structure with the pieces of electrode and separator webs.

The apparatus 10 allows a reel change to be actuated, when a reel of electrode or separator web is running out, as will be further described.

The apparatus 10 comprises a frame 11, made of several parts. The apparatus 10 comprises a first mandrel 12 and a second mandrel 12b, supported by the frame 11.

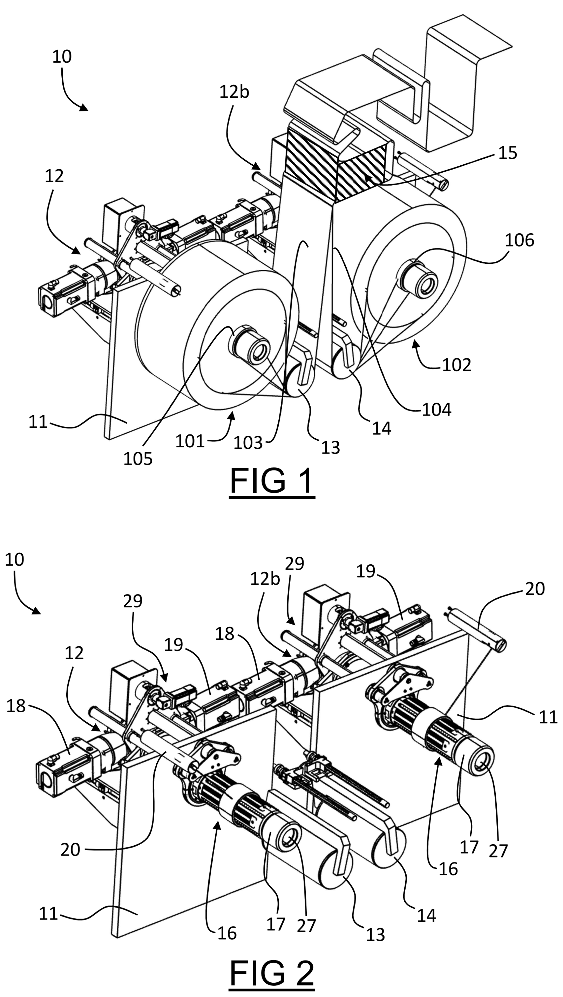

As can be seen in Figure 1, the mandrel 12 houses a first reel 101, while the mandrel 12b accommodates a second reel 102, from which the web 103 and the web 104 are respectively unwound.

The web 103 and the web 104 are wound, respectively, on the hollow cores 105 and 106 and thus constitute the reels 101 and 102.

The mandrel 12 and the mandrel 12b are parallel to each other, so that the webs 103 and 104 are also unwound parallel to each other, being guided by the return rollers 13 and 14 of the apparatus 10.

In the zone where the web 103 and the web 104 converge with each other, the apparatus 10 comprises a splicing system 15. The splicing system 15, schematized in Figure 1 as a simple block, is configured to splice the first web 103 of the reel 101 with the second web 104 of the further reel 102, so as to have the feeding of the web to continue uninterruptedly to the machine for electrochemical cell production, even when one of the webs 103 and 104 should run out.

Upon running out of one of the webs 103 or 104, the apparatus 10 is configured to perform the change of one of the reels 101 or 102, as needed.

In the view of Figure 2, in which the reels 101 and 102 and the relative webs 103 and 104 are not present, the conformation of the mandrels 12 and 12b of the apparatus 10 can be appreciated in greater detail.

The mandrel 12b comprises elements similar to the elements of the mandrel 12; in the following reference will be made to a description of the elements of the mandrel 12 with the understanding that the elements of the mandrel 12b are included by analogy.

The mandrel 12 comprises a shaft 16 which can accommodate a hollow core of a reel. The shaft 16 comprises a loading end 17 through which the hollow core of the reel can be threaded onto the shaft 16.

The shaft 16 is rotated by the electric motors 18 and 19, and by a suitable transmission device of the mandrel 12.

The apparatus 10 comprises a sensor 20, such as a laser distance gauge, configured to measure a radius of the reel and thus estimate a residual amount of web, in view of its depletion and the consequent reel change.

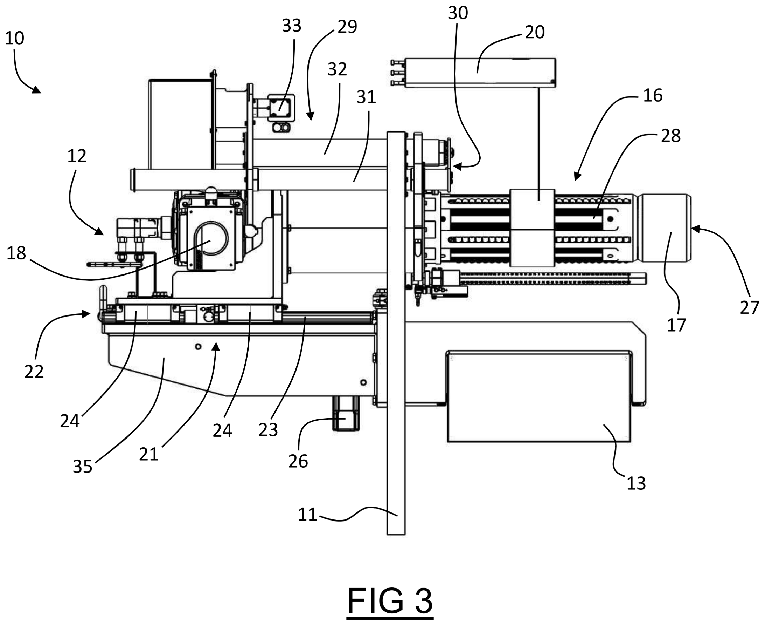

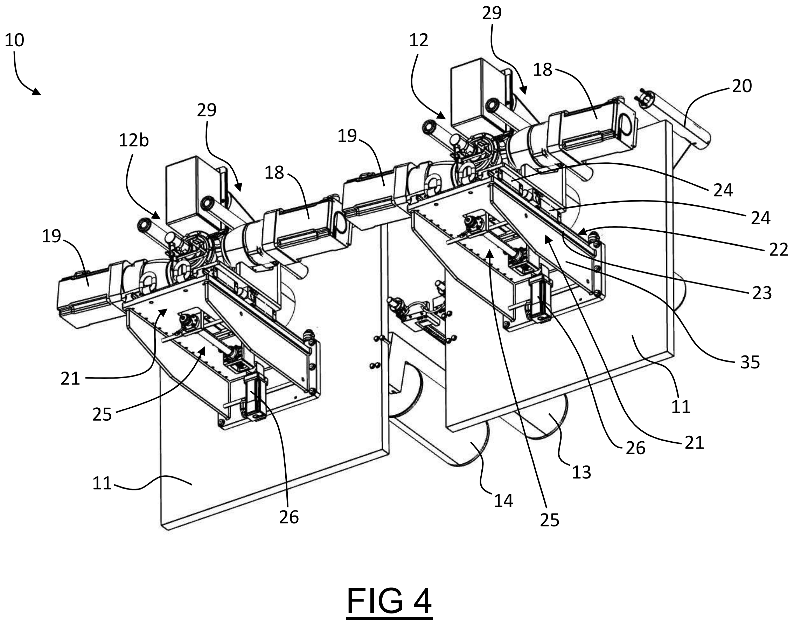

As can be seen in the side view of Figure 3 and in the perspective view from below of Figure 4, the apparatus 10 comprises an extraction system 21, configured to translate the mandrel 12 and the shaft 16 in a longitudinal direction with respect to the axis of rotation of the mandrel 12.

The extraction system 21 comprises a linear extraction guide 22 having a pair of rails 23, a single rail 23 of which is visible in the side view of Figure 3. The linear extraction guide 22 also has two pairs of runners 24, of which a single pair of runners 24 is visible in the side view of Figure 3.

The extraction system 21 comprises an extraction actuator 25, comprising a worm screw and an electric motor 26 which suitably drives the worm screw of the extraction system 21.

Under the action of the worm screw of the extraction actuator 25, put into motion by the electric motor 26, the mandrel 12 together with the shaft 16 translate in the longitudinal direction with respect to the axis of rotation of the mandrel 12.

For example, compared to the configuration of Figure 3, the mandrel 12 can translate to the right, making the shaft 16 and the loading end 17 protrude more with respect to the frame 11, so as to make it easier to load or unload a reel during reel change operations.

The shaft 16 comprises, in the portion proximal to the frame 11, an abutment end element that acts as a stop for a core of the reel threaded on the shaft 16 itself.

The shaft 16 comprises, in the portion distal from the frame 11 and at the loading end 17, a concave recess 27 configured to couple head-on with further supports used in the reel change, as will be further described.

The shaft 16 comprises a retaining system for a reel having a plurality of spring-loaded elements 28, configured to retain a core of the reel when the shaft 16 itself is rotated.

The shaft 16 comprises a sliding system, for example by means of rollers or other rolling elements, to facilitate the sliding of a core of the reel when the spring-loaded elements 28 do not engage the core of the reel and the shaft 16 itself is stationary.

The apparatus 10 comprises a pusher system 29 configured to act on a hollow core or on a reel, new or partially run out, present on the shaft 16. The pusher system 29 allows to slide the hollow core or the reel on the shaft 16, to the right in the example of Figure 3, until it goes beyond the loading end 17 and then unthread it out of the shaft 16.

The pusher system 29 translates together with the mandrel 12, being mounted above it, so as not to require an extra stroke to reach the core of the reel when the shaft 16 is in the loading/unloading position.

The pusher system 29 comprises a movable plate element 30 that interacts by means of an abutment surface with the core of the reel and/or with the reel itself, composed of core and web, possibly present on the shaft.

The pusher system 29 comprises linear thrust guides made by means of sleeves 31 that can be unthreaded, which slidably support the plate element 30.

The movement of the plate element 30 is realized by means of a pusher rod 32, which includes a worm screw put in motion by an electric motor 33 and a relative transmission.

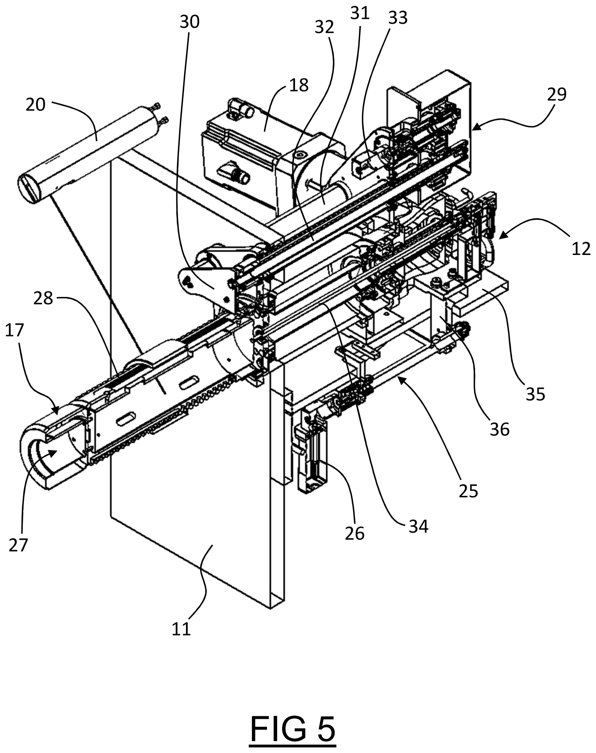

As can best be appreciated in the sectional view of Figure 5, the retaining system for a reel comprises a plurality of spring-loaded elements 28, which are expandable by means of a pneumatic device 34 that supplies compressed air into a duct and moves the spring-loaded elements 28 by means of suitable pneumatic elements such as pistons or the like. The spring-loaded elements 28 are brought by the action of the compressed air into an expanded position, causing the diameter of the shaft 16 to increase so as to retain by interference a core of the reel threaded on the shaft 16 itself.

The pneumatic device 34 is suitably connected to a compressed air line, controlled according to the needs of the retaining system.

The mandrel 12 is supported, on one side of the frame 11, by a shelf 35 under which the extraction actuator 25 is positioned. The extraction actuator 25 transmits the motion to the mandrel 12, supported by the linear extraction guide 22, by means of an upright element 36 that passes through a window obtained in the shelf 35. The upright element 36 transfers to the mandrel 12 the motion of the worm screw of the extraction actuator 25, allowing the mandrel 12 to translate in a longitudinal direction to the axis of rotation of the shaft 16.

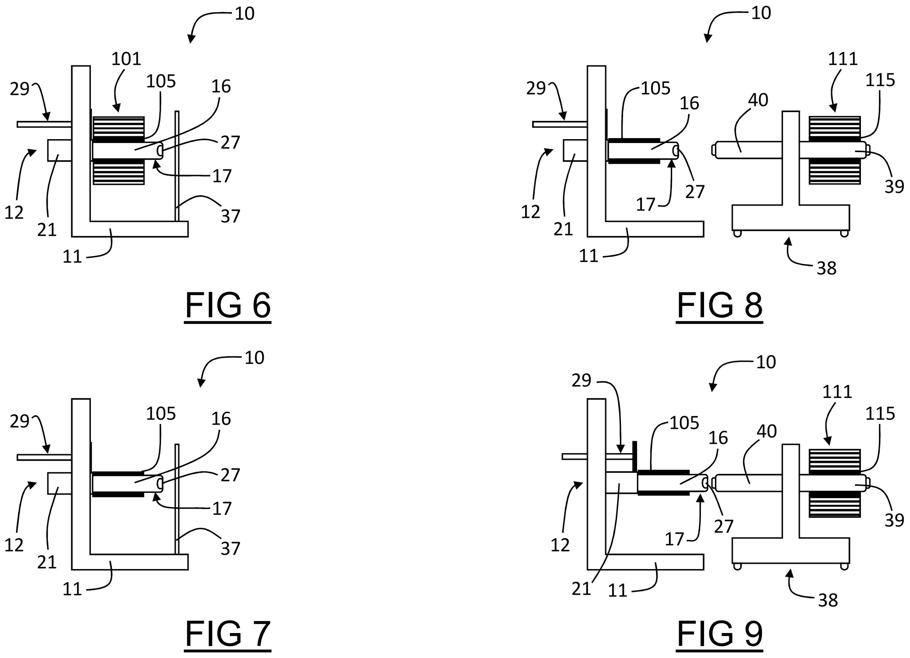

Figures 6 to 17 exemplify the reel change operations carried out by means of the apparatus 10, suitably schematized.

In Figure 6, the reel 101 having a hollow core 105 is placed on the shaft 16, which is in a working position; the reel 101 is retained on the shaft 16 in rotation and the web of the reel 101 is used for a production, for example for electrochemical cell production.

In Figure 7, the reel has run out of its own web and only the hollow core 105 remains on the shaft 16; the rotation of the shaft 16 is stopped and the protective bulkhead 37 of the apparatus 10 is removed, for example lifted or retracted to free access to the mandrel 12.

In Figure 8, a loading system comprising a self-driving vehicle 38 approaches the mandrel 12. The self-driving vehicle 38 comprises a first support 39, on which a reel 111 having a hollow core 115 is placed. The self-driving vehicle 38 comprises a second support 40, which in the example is empty, facing the mandrel 12.

In Figure 9, the shaft 16 together with the mandrel 12 is translated by the extraction system 21 into a loading/unloading position, approaching the area occupied by the self-driving vehicle 38. On the shaft 16 there is the hollow core 105, which is also brought into the loading/unloading position. The pusher system 29 also translates together with the mandrel 12, remaining close to the hollow core 105.

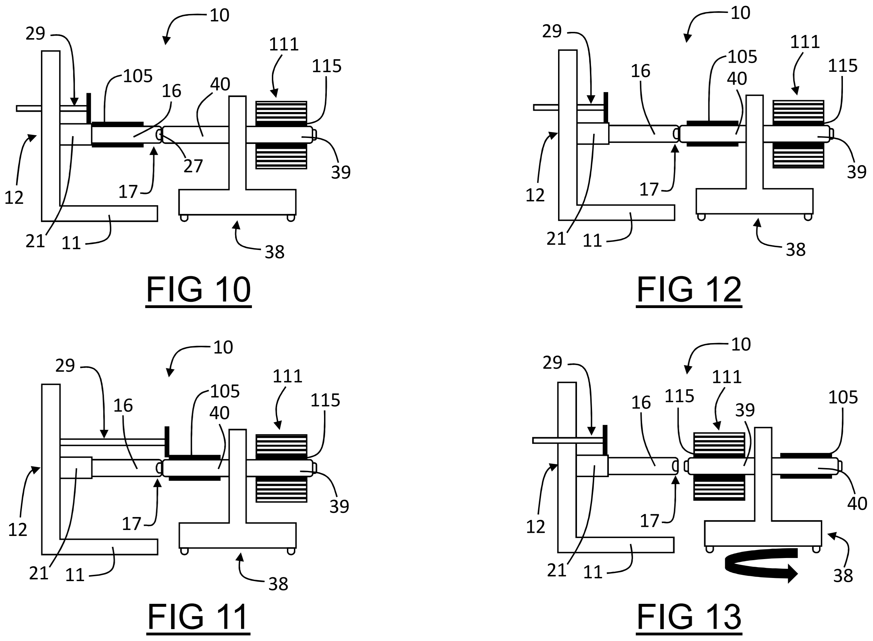

In Figure 10, one end of the second support 40 is coupled head to head with the concave recess 27 of the loading end 17, making a connection between the shaft 16 and the self-driving vehicle 38. The diameter of the shaft 16 and the diameter of the support 40 are compatible with each other to allow the transfer of the hollow core 105 between them. A retaining system of the apparatus 10 moves to the thread/unthread position, for example by slightly reducing the diameter of the shaft 16 and releasing the hollow core 105.

In Figure 11, the pusher system 29 pushes the hollow core 105 by sliding it on the shaft 16 and then on the second support 40.

In Figure 12, the pusher system 29 retracts to the previous position, and the hollow core 105 is loaded on the self-driving vehicle 38, to be subsequently transported elsewhere, for example to a warehouse.

In Figure 13, the self-driving vehicle 38 disengages from the loading end 17 and rotates on its position, until its first support 39 is facing towards the mandrel 12. The reel 111 is thus arranged proximally to the shaft 16.

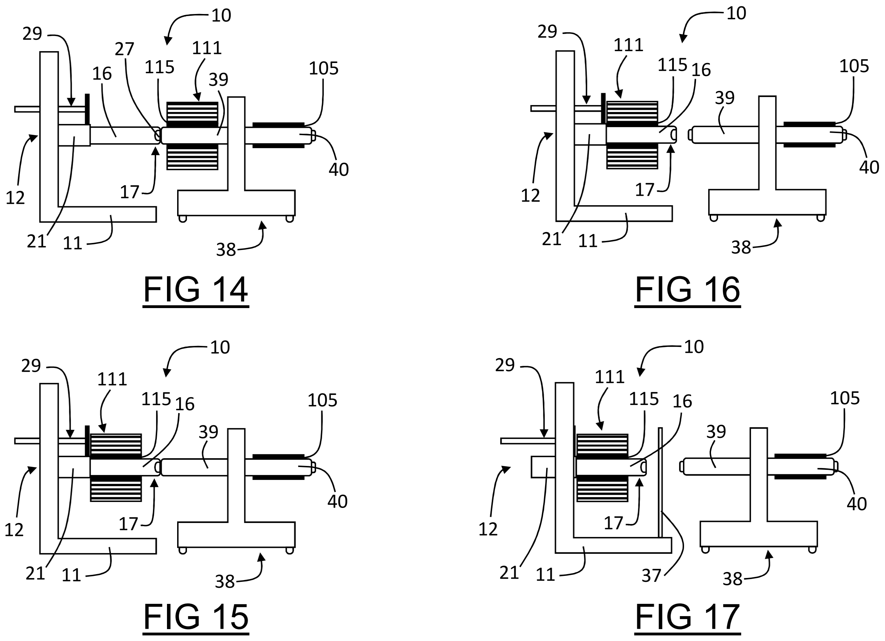

In Figure 14, one end of the first support 39 is coupled head to head with the concave recess 27 of the loading end 17, again making a connection between the shaft 16 and the self-driving vehicle 38. The diameter of the shaft 16 and the diameter of the support 39 are compatible with each other to allow the transfer of the hollow core 115 between them.

In Figure 15, a pusher system (not depicted) of the self-driving vehicle 38 pushes the hollow core 115 and the reel 111 by sliding them from the first support 39 as far as the shaft 16, up to an abutment end element of the shaft 16.

In Figure 16, the self-driving vehicle 38 is decoupled from the loading end 17 of the shaft 16. A retaining system of the shaft 16 moves to a retaining position, for example by slightly increasing the diameter of the shaft 16 and engaging the hollow core 115.

In Figure 17, the shaft 16 together with the mandrel 12 is translated by the extraction system 21 into a working position, again approaching the frame 11. On the shaft 16 there is the hollow core 115 and the reel 111 loaded with web. The pusher system 29 also translates together with the mandrel 12, returning to the original position. The protective bulkhead 37 of the apparatus 10 is restored, to prevent unwanted access to the mandrel 12.

At this point, the self-driving vehicle 38 may move away from the work zone, the reel change having been completed. Similar to what is depicted in Figure 6, now the reel 111 having the hollow core 115 is placed on the shaft 16 in the working position and the run-out reel 101 has been replaced. The web of the reel 111 is then used to continue a production, for example for electrochemical cell production.

## Claims

1. Apparatus for changing reels in electrochemical cell production, comprising:
- a frame (11);
- at least one mandrel (12) supported by said frame (11) and rotatable about an axis of rotation, said at least one mandrel (12) comprising a shaft (16) configured to accommodate a hollow core (105) of a reel, said shaft (16) comprising a loading end (17) configured to thread said hollow core (105) of said reel;
- an extraction system (21) configured to translate at least said shaft (16) in a longitudinal direction with respect to said axis of rotation, said shaft (16) being movable between a working position and a loading/unloading position, said loading end (17) being at a greater distance from said frame (11) in said loading/unloading position than in said working position.

2. Apparatus according to claim 1, wherein said extraction system (21) is further configured to translate said at least one mandrel (12) integrally with said shaft (16).

3. Apparatus according to claim 2, wherein said extraction system (21) comprises said at least one linear extraction guide (22) and said at least one extraction actuator (25), wherein said at least one linear extraction guide (22) supports said at least one mandrel (12), and wherein said at least one extraction actuator (25) is configured to translate said at least one mandrel (12) on said linear extraction guide (22) between said working position and said loading/unloading position.

4. Apparatus according to any one of claims 1 to 3, further comprising a pusher system (29) configured to slide said hollow core (105) of said reel onto said shaft (16), said pusher system (29) being movable between a retracted position, wherein said pusher system (29) is distal from said loading end (17), and an extended position, wherein said pusher system (29) goes beyond said loading end (17) to unthread said hollow core (105) out of said reel of said shaft (16).

5. Apparatus according to claim 4, wherein said pusher system (29) further comprises:
- a plate element (30) configured to abut with at least with said hollow core (105) of said reel;
- at least one linear thrust guide (31), supporting said plate element (30) and configured to allow translation of said plate element (30) in a direction parallel to said axis of rotation;
- at least one thrust actuator (32) configured to move said plate element (30) on said at least one linear thrust guide (31).

6. Apparatus according to any one of claims 1 to 5, wherein said shaft (16) comprises a retaining system (28) expandable between a thread/unthread position wherein said shaft (16) has a first diameter smaller than a diameter of said hollow core (105) of said reel, and a retaining position wherein said shaft (16) has a second diameter greater than or equal to said diameter of said hollow core (105) of said reel, for retaining said hollow core (105) on said shaft (16) during a rotation of said mandrel (12).

7. Apparatus according to any one of claims 1 to 6, further comprising:
- at least one additional mandrel (12b) supported by said frame (11) and rotatable about an additional axis of rotation, said at least one additional mandrel (12b) being parallel to said at least one mandrel (12), said additional mandrel (12b) comprising an additional shaft (16) configured to accommodate a further hollow core (106) of said further reel, said additional shaft (16) comprising an additional loading end (17) configured to thread said further hollow core (106) of said further reel;
- an additional extraction system (21) configured to translate at least said additional shaft (16) in a longitudinal direction with respect to said additional axis of rotation, said additional shaft (16) being movable between an additional working position and an additional loading/unloading position, said additional loading end (17) being at a greater distance from said frame (11) in said additional loading/unloading position than in said additional working position;
- a splicing system (15) configured to splice a first web (103) of said reel with a second web (104) of said further reel.

8. Apparatus according to any one of claims 1 to 7, further comprising a loading system (38), movable with respect to said frame (11) and comprising at least one support (39) for a hollow core (105) of reel, said at least one support (39) being configured to interface with said loading end (17) at said loading/unloading position, to transfer said at least one hollow core (105) of reel between said at least one support (39) and said shaft (16) and/or vice versa.

9. Method for changing reels in electrochemical cell production, including:
- providing a first hollow core (105) of a first reel (101) on a shaft (16) of a mandrel (12), said mandrel (12) being rotatable and supported by a frame (11), said shaft (16) being in a working position;
- translating by an extraction system (21) said shaft (16) to a loading/unloading position, moving a loading end (17) of said shaft (16) away from said frame (11);
- unthreading said first hollow core (105) out of said shaft (16), through said loading end (17);
- threading a second hollow core (115) of a second reel (111) onto said shaft (16), through said loading end (17);
- translating by said extraction system (21) said shaft (16) to said working position, bringing said loading end (17) of said shaft (16) closer to said frame (11).

10. Method according to claim 9, further comprising pushing on said first hollow core (105) by means of a pusher system (29) associated with said rotating mandrel (21), to cause said loading end (17) to go beyond said first hollow core (105), unthreading it out of said shaft (16).

11. Method according to claim 9 or 10, further comprising, prior to unthreading said first hollow core (105) out of said shaft (16): contracting said shaft (16) to a first diameter less than a diameter of said hollow core (105); and further comprising, after threading said second hollow core (115) onto said shaft (16), expanding said shaft (16) to a second diameter greater than or equal to a diameter of said second hollow core (115) to retain said second hollow core (115) on said shaft (16) during a rotation of said mandrel (12).

12. Method according to any one of claims 9 to 11, further comprising providing a loading system (38) movable with respect to said frame (11); providing said second hollow core (115) of said second reel (111) on a first support (39) of said loading system (38); interfacing a second support (40) of said loading system (38) with said loading end (17) in said loading/unloading position; transferring said first hollow core (105), unthreaded out of said shaft (16), onto said second support (40); interfacing said first support (39) of said loading system (38) with said loading end (17) in said loading/unloading position; transferring said second hollow core (115) of said second reel (111) by threading it onto said shaft (16).

13. Method according to claim 12, wherein said first support (39) and said second support (40) are coupled head to head with said loading end (17) in said loading/unloading position.

14. Machine configured for the production of electrochemical cells, comprising:
a feed station of electrode and separator webs;
a forming station configured to package said electrode and separator webs to form a semi-finished product with an overlapping layer structure;
wherein said electrode and separator web feed station comprises at least one reel changing apparatus (10) according to any one of claims 1 to 8.

15. Electrochemical cell production method, wherein the method comprises:
feeding electrode and separator webs in reels;
cutting said electrode and separator webs into pieces of electrode and separator webs;
forming a semi-finished product with an overlapping layer structure with said pieces of electrode and separator webs; wherein when a reel of electrode or
separator web is running out, it is provided a reel change with the reel change method according to any one of claims 9 to 13.
